# EUROPEAN PATENT APPLICATION

(11) **EP 4 610 861 A1**
(43) Date of publication of application: **03.09.2025**
(21) Application number: 23893305.5
(22) Date of filing: 23.08.2023
(51) Int. Cl.: G06F 21/60, G06F 21/62, H04L 9/40

(54) **DATA PROCESSING METHOD AND SYSTEM, ELECTRONIC DEVICE, AND COMPUTER READABLE STORAGE MEDIUM**

(30) Priority: 23.11.2022 CN 202211479113
(71) Applicant: ZTE CORPORATION, Shenzhen, Guangdong 518057 (CN)
(72) Inventor: CAO, Yaobin, Shenzhen, Guangdong 518057 (CN)
(74) Representative: Canzler & Bergmeier Patentanwälte Partnerschaft mbB
(86) International application number: PCT/CN2023/114409
(87) International publication number: WO 2024/109211

(57) **Abstract**

The present disclosure provides a data processing method, a data processing system, an electronic device, and a computer readable storage medium, and relates to the technical field of data processing. The data processing method includes: determining attribute information of a hole (S 101), and processing original data based on the attribute information of the hole to obtain hole data (S102); and processing the hole data to obtain target data (S103).

## Description

### CROSS REFERENCE TO RELATED APPLICATIONS

The present disclosure claims the priority to Chinese Patent Application No. 202211479113.5 filed on November 23, 2022, the contents of which are incorporated herein by reference in their entirety.

### TECHNICAL FIELD

The present disclosure relates to the technical field of data processing, and in particular, to a data processing method, a data processing system, an electronic device, and a computer readable storage medium.

### BACKGROUND

With the development of internet technology, the need for security of information is also increasing day by day. Especially during processing a processed object (e.g., video data, audio data, and text data represented in tabular form or in textual form) with a large data volume, security of private information contained in the processed object attracts more and more attention.

In general, security of data is ensured by encrypting and then decrypting the data. However, for the processed object with the large data volume, a processing time for decrypting the processed object is too long. For example, when a user opens a private album stored on a server, if there are too many photos in the private album, the user usually has to wait for a long time for the server decrypting the private album, which reduces the user experience.

### SUMMARY

In a first aspect, an embodiment of the present disclosure provides a data processing method, including: determining attribute information of a hole; processing original data based on the attribute information of the hole to obtain hole data; and processing the hole data to obtain target data.

In a second aspect, an embodiment of the present disclosure provides a data processing method, including: acquiring attribute information of a hole from a preset storage region, the attribute information of the hole being matched with target data; extracting hole data according to the attribute information of the hole to obtain to-be-decrypted data; and decrypting the to-be-decrypted data to obtain decrypted data, and backfilling the decrypted data into the hole corresponding to the to-be-decrypted data to obtain original data.

In a third aspect, an embodiment of the present disclosure provides a data processing system, including: at least one of an encryption device or a decryption device; the encryption device is configured to perform the data processing method described in the first aspect of the present disclosure; and the decryption device is configured to perform the data processing method described in the second aspect of the present disclosure.

In a fourth aspect, an embodiment of the present disclosure provides an electronic device, including: at least one processor; and a memory having stored thereon at least one computer program which, when executed by the at least one processor, causes the at least one processor to implement the data processing method provided herein.

In a fifth aspect, an embodiment of the present disclosure provides a computer readable storage medium storing a computer program which, when executed by a processor, causes the processor to implement the data processing method provided herein.

With respect to the above and other aspects of the present disclosure and the implementations thereof, further explanation is provided in BRIEF DESCRIPTION OF DRAWINGS, DETAIL DESCRIPTION OF EMBODIMENTS, and the claims.

### BRIEF DESCRIPTION OF DRAWINGS

FIG. 1 is a flowchart illustrating a data processing method according to an embodiment of the present disclosure.
FIG. 2 is a flowchart illustrating a data processing method according to an embodiment of the present disclosure.
FIG. 3 is a block diagram of an encryption device according to an embodiment of the present disclosure.
FIG. 4 is a block diagram of a decryption device according to an embodiment of the present disclosure.
FIG. 5 is a block diagram of a data processing system according to an embodiment of the present disclosure.
FIG. 6 is a flowchart illustrating an operating method of a data processing system according to an embodiment of the present disclosure.
FIG. 7 is a schematic diagram illustrating original data including holes according to an embodiment of the present disclosure.
FIG. 8 is a schematic structural diagram illustrating an exemplary hardware architecture of a computing device capable of implementing the data processing methods and devices according to the embodiments of the present disclosure.

### DETAIL DESCRIPTION OF EMBODIMENTS

In order to make the objectives, technical solutions and advantages of the present disclosure clearer, the embodiments of the present disclosure are described in detail below in conjunction with the drawings. It should be noted that the embodiments herein and the features therein can be combined with one another if no conflict is incurred
At present, for security of data, the data may be protected with the following methods: performing encryption on the data overall to obtain encrypted data, and for using the data, decrypting the encrypted data to obtain original data; or, acquiring authorization from a user to manage the data.

However, the above management method of acquiring the authorization from the user cannot realize reverse processing on binary data, cannot ensure the user to obtain the complete data, and thus reduces accuracy of the data. In such method, the data also needs to be further encrypted to ensure the security of the data.

The above method of performing encryption on the data overall is applicable to data with a small data volume (e.g., to encrypt a text file). Taking audio and video data as an example, the related encryption methods include: file header encryption and stream encryption.

The file header encryption is to encrypt data header information of a file, belongs to a partial encryption method, has weak encryption strength, and is applicable to a video player or an audio player. However, when the file is actually used, substantial contents of the file can be acquired by skipping the data header information of the file, which reduces the security of the file.

Compared with the file header encryption, the stream encryption may slightly improve the security, and is an overall encryption method of encrypting the file overall. For example, when a certain file is played, the file needs to be decrypted so as to be played, and a waiting time of the user is increased in a case where a data volume corresponding to the file is relatively large, which reduces the user experience. Moreover, once a third-party device obtains a decryption method corresponding to the encryption method for encrypting the file, the whole file is prone to be stolen.

However, if the data with the large data volume (e.g., log information stored in a database, and video files or image data accumulated on a server by a user for a long time) is to be encrypted and decrypted overall, durations for encrypting and decrypting the data each may be too long, such that the waiting time of the user exceeds a time tolerable for the user, and the user experience is reduced.

The present disclosure provides a data processing method, a data processing system, an electronic device, and a computer readable storage medium.

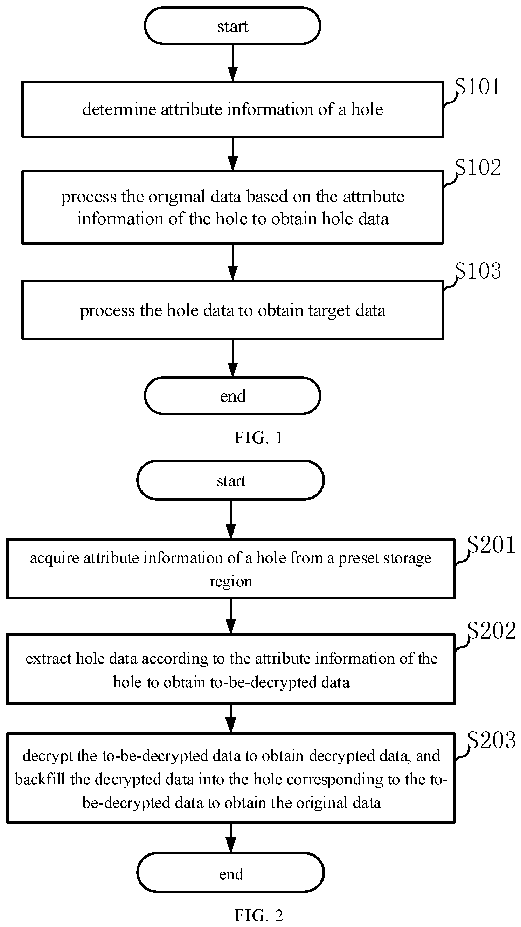

FIG. 1 is a flowchart illustrating a data processing method according to an embodiment of the present disclosure. The data processing method is applicable to a data processing device such as an encryption device. As shown in FIG. 1, the data processing method includes, but is not limited to, the following operations S101 to S103.

At operation S101, attribute information of a hole is determined.

The hole is a small regular or irregular region of original data, for example, the hole may be referred to as a "window", i.e., a captured section of linear data; and the hole may also be data having two-dimensional spatial features.

At operation S102, the original data is processed based on the attribute information of the hole to obtain hole data.

The attribute information of the hole may also be referred to as metadata of the hole, i.e., data for representing feature information of the hole. The original data is punched based on the attribute information of the hole to obtain the hole data, and the hole data is data in the original data, which is located in the hole.

At operation S103, the hole data is processed to obtain target data.

The target data includes: the processed hole data and the data other than the hole data in the original data (e.g., sparse data or the like).

**In** the data processing method provided by the present disclosure, by determining the attribute information of the hole and processing the original data based on the attribute information of the hole, the hole data, which is the data located in the hole in the original data, is obtained, so that operations on the hole data can be easily performed, and the amount of data manipulations is reduced; and the hole data is processed to obtain the target data, that is, not all the original data but merely the hole data is processed to obtain the target data, which increases the speed of data processing speed and improves the security of the data.

In some implementations, before determining the attribute information of the hole at operation S101, the data processing method further includes: determining a data type and data size information of the original data; and generating a boundary sequence according to the data type and the data size information.

The boundary sequence is configured to determine the attribute information of the hole. For example, the boundary sequence is configured to restrict position information of the hole and size information of the hole in the original data. The boundary sequence may include grids having equally divided structures, or may include grids having random mesh structures, and is merely to be set correspondingly with respect to the original data for restricting positions and sizes of different holes in the original data.

By analyzing the original data, the data type and the data size information of the original data are determined to clarify features of the original data, for example, whether the original data is video data, audio data, text data or the like is determined, and a data size (such as a length and a width of the data) corresponding to the original data is determined, so that the original data can be easily restricted in terms of boundary, to represent boundary information of the original data by generating the boundary sequence, and during punching the original data, a boundary corresponding to the boundary sequence cannot be overstepped, the original data can be punched purposefully, and the accuracy of punching can be improved.

In some implementations, determining the attribute information of the hole at operation S101 includes: determining the attribute information of the hole based on a random sequence generated by a random number generator.

The attribute information of the hole includes at least one of position information of the hole, size information of the hole, density information of holes, or shape information of the hole.

For example, the density information of holes may include density information obtained by punching in different regions of the original data, for example, a density of holes obtained by punching in a core region is greater than a preset density threshold, and a density of holes obtained by punching in a non-core region may be less than or equal to the preset density threshold, so as to reduce the amount of data to be processed and increase the speed of data processing.

The shape information of the hole includes at least one of followings: a square, a circle, a rectangle, a triangle, or any other different trilateral or quadrangle. The size information of the hole includes an inner diameter of the hole and a length of each side of the hole, and the like. The position information of the hole refers to a position of the hole in the original data, so as to position the hole according to the position information.

For example, the size information of the hole includes: preset length information and preset width information; a data length of the to-be-processed data corresponding to the hole is matched with the preset length information; and a data width of the to-be-processed data corresponding to the hole is matched with the preset width information. In this way, it can be ensured that the to-be-processed data obtained after the data in the hole (i.e., the hole data) is processed corresponds to the original data in the hole (i.e., the hole data in the original data), a length of the target data finally obtained is the same as that of the original data, and the matching degree of the data is improved.

It should be noted that the attribute information of the hole is information randomly determined based on the random sequence, so as to prevent a third-party device from intercepting or decrypting the data in the hole after acquiring the attribute information of the hole, thereby improving the security of the data in the hole.

In some implementations, generating the boundary sequence according to the data type and the data size information includes: based on the data type, planning the data size information by adopting a rule of densifying in a region of key data, to generate the boundary sequence; or, based on the data type and the data size information, randomly generating the boundary sequence which is a sequence including a plurality of random grids.

The rule of densifying in the region of key data may be a rule determined based on the region of key data, for example, to plan the grids to be dense in focused data but relatively loose in non-focused data.

Based on different data types, different rules of planning are adopted purposefully for planning different parts in the original data, so that the generated boundary sequence has certain randomness and can represent features of the original data, and punching can be performed for different grids during subsequent punching to improve the accuracy of punching for the data.

By randomly generating the boundary sequence including the plurality of random grids, the boundary sequence can have the randomness, the possibility of calculating the boundary sequence can be reduced, the data can be prevented from being cracked, and the security of the data can be improved.

In some implementations, the data type includes video data. Based on the data type, planning the data size information by adopting the rule of densifying in the region of key data to generate the boundary sequence includes: planning grids for key frames of the video data to obtain a first grid sequence; planning grids for video frames other than the key frames in the video data to obtain a second grid sequence; and generating the boundary sequence according to the first grid sequence and the second grid sequence.

A density of holes in the first grid sequence is greater than that in the second grid sequence. The key frames include: benchmark data frames (that is, a previous data frame and a following data frame may be obtained by a calculation based on a key frame, and the key frames are basic data frames to be processed in the video data), or data frames to be used by a user.

For example, the video data is a video file in a Moving Picture Experts Group 4 (MP4) format, and the video file includes the key frames; and during punching the video data, holes may be punched in the key frames as many as possible, so as to ensure that the density of holes in the first grid sequence corresponding to the key frames is greater than a preset density threshold and the protection for the key frames is enhanced. The density of holes in the second grid sequence may be set to be less than the preset density threshold to highlight the protection for the key frames.

By planning different grids for different types of data frames in the video data, processing on the key frames is highlighted, and the security of the key frames of the video data is ensured; moreover, by setting the density of holes in the second grid sequence to be less than the preset density threshold, the number of holes, corresponding to the second grid sequence, to be punched can be reduced, and the efficiency of data processing can be improved.

In some implementations, the data type includes text data. Based on the data type, planning the data size information by adopting the rule of densifying in the region of key data to generate the boundary sequence includes: planning grids for a header of a data packet in the text data to obtain a third grid sequence; planning grids for data other than the header of the data packet in the text data to obtain a fourth grid sequence; and generating the boundary sequence according to the third grid sequence and the fourth grid sequence.

For example, the grids are planned for the header of the data packet in the text data to obtain the third grid sequence with a feature of concentrated distribution; grids are planned for the data other than the header of the data packet in the text data to obtain the fourth grid sequence with a feature of uniform distribution; and the boundary sequence is determined according to the third grid sequence and the fourth grid sequence.

By differently planning different parts of the text data accordingly, the third grid sequence corresponding to the header of the data packet is endowed with the feature of concentrated distribution (for example, the number of grids is greater than a preset quantity threshold), and the fourth grid sequence corresponding to the data other than the header of the data packet in the text data is endowed with the feature of uniform distribution (for example, the number of grids is less than or equal to the preset quantity threshold, and all the grids in the fourth grid sequence are equally divided), so that different parts of the data can be processed in different ways, and the protection for the header of the data packet can be enhanced.

In some implementations, processing the original data based on the attribute information of the hole to obtain the hole data at operation S102 may be implemented by: determining at least one of the position information of the hole or the size information of the hole based on a random sequence generated by a random number generator; and according to at least one of the position information of the hole or the size information of the hole, punching at a random grid boundary sequence corresponding to the original data to obtain the original data including the hole.

The random grid boundary sequence includes a plurality of grid sequences. For example, after acquiring the random sequence generated by the random number generator, the distribution of the random sequence is made to correspond to the original data, so as to determine the position in the original data to be punched and the corresponding size information of the hole (e.g., length information of the hole and width information of the hole), so that which part of the original data is to be punched is specified for obtaining the original data including the hole.

It should be noted that the number of holes obtained by punching the original data may be one or more as the expectation on confidentiality of the original data, and is not limited herein.

In some implementations, processing the hole data to obtain the target data at operation S103 may be implemented by: replacing the hole data with preset data to obtain the target data.

The preset data may be preset values such as all 0, all 1 or the like, or may be preset values based on users' expectations (e.g., specific data such as all A or all B).

By replacing the hole data with the preset values, the original data is changed, and the target data is obtained. For example, for deleting the original data stored in a memory, merely a record tag (i.e., information such as an index corresponding to a storage address) corresponding to the original data is deleted, but specific contents of the original data are not deleted. Therefore, for destroying the original data, the hole data can be replaced with the preset data, so as to ensure that the target data cannot be recovered to the original data, thereby ensuring the security of the data.

In some implementations, processing the hole data to obtain the target data at operation S103 may also be implemented by: encrypting the hole data by a preset encryption algorithm to obtain to-be-processed data; and backfilling the to-be-processed data into the hole corresponding to the to-be-processed data to obtain the target data.

For example, the preset encryption algorithm such as an Advanced Encryption Standard (AES) algorithm may be adopted to encrypt the data in the hole, so as to prevent the to-be-processed data from being acquired by the third-party device. Moreover, by backfilling the to-be-processed data into the hole corresponding to the to-be-processed data, integrity of the data can be ensured, a data length of the target data obtained can be matched with a data length of the original data, which facilitates data transmission.

For example, the data in the hole may be restructured, and the restructured data is then encrypted by a preset encryption algorithm, so as to increase the difficulty in cracking the encrypted data (i.e., the to-be-processed data).

In some implementations, after encrypting the hole data by the preset encryption algorithm to obtain the to-be-processed data and before backfilling the to-be-processed data into the hole corresponding to the to-be-processed data to obtain the target data, the data processing method further includes at least one of the following operations: storing the attribute information of the hole in a preset storage region; or, storing the to-be-processed data in a preset storage region.

By storing the attribute information of the hole in the preset storage region (such as a memory or a cache of a device), subsequent decryption of the target data can be facilitated, and the original data which is accurate can be acquired.

By storing the to-be-processed data in the preset storage region, the to-be-processed data can be backed up, which reduces possibility of loss of the to-be-processed data. For using the to-be-processed data, the to-be-processed data can be acquired from the preset storage region and then backfilled into the hole corresponding to the to-be-processed data, which ensures accuracy of the target data obtained.

Since the position and the size of the hole are randomly determined parameters during the hole data being processed, the third-party device cannot acquire the attribute information of different holes, and thus cannot decrypt the target data, so that the security of the data during transmission is ensured.

However, if a receiver of the target data is to obtain the original data corresponding to the target data, the receiver acquires the attribute information of the hole from the preset storage region to ensure correctness of an decryption operation on the target data, so that the receiver of the target data can accurately decrypt the target data by using the attribute information of the hole acquired from the preset storage region, to obtain the original data desired by the user, so as to meet the expectation of a user at the receiver for using the original data.

FIG. 2 is a flowchart illustrating a data processing method according to an embodiment of the present disclosure. The data processing method is applicable to a data processing device such as a decryption device. As shown in FIG. 2, the data processing method includes, but is not limited to, the following operations S201 to S203.

At operation S201, attribute information of a hole is acquired from a preset storage region.

The attribute information of the hole is matched with target data. The attribute information of the hole includes: at least one of position information of the hole, size information of the hole, or shape information of the hole.

By acquiring the attribute information of the hole, which is stored in advance by an encryption device, from the preset storage region (e.g., a memory of a device or a cache of a device, or the like), the target data acquired can be decrypted by using the attribute information of the hole, so as to obtain original data corresponding to the target data, and the accuracy of decryption on the target data is improved.

At operation S202, hole data is extracted according to the attribute information of the hole to obtain to-be-decrypted data.

The hole data is data in the target data, which is located in the hole and has been encrypted.

For example, by extracting a part of the target data, which is located in the hole, according to at least one of the position information (e.g., a start position and an end position) of the hole, the size information (e.g., a length and a width of the hole or a radius of the hole) of the hole, or the shape information (e.g., a square, a rectangle, or a circle) of the hole, the data (i.e., the to-be-decrypted data) which is to be decrypted can be specified, and the efficiency of data processing can be improved.

At operation S203, the to-be-decrypted data is decrypted to obtain decrypted data, and the decrypted data is backfilled into the hole corresponding to the to-be-decrypted data to obtain the original data.

For example, the to-be-decrypted data may be decrypted by a preset decryption algorithm (e.g., a decryption algorithm corresponding to the preset encryption algorithm used by the encryption device), so that the decrypted data which is accurate is obtained; further, the decrypted data is backfilled into the hole corresponding to the to-be-decrypted data, so that the target data can be restored to the original data, which facilitates the user to perform operations on the original data.

In the data processing method provided by the present disclosure, by acquiring the attribute information of the hole matched with the target data from the preset storage region, a position and a size of the hole in the target data can be specified to facilitate further processing on the data in the hole; and by extracting the hole data according to the attribute information of the hole to obtain the to-be-decrypted data, decrypting the to-be-decrypted data to obtain the decrypted data, and backfilling the decrypted data into the hole corresponding to the to-be-decrypted data to obtain the original data, the amount of data to be processed during decrypting the data is reduced, and the speed of data decryption is increased, so that the user can obtain the original data which is accurate as soon as possible, and the user experience can be improved.

In some implementations, extracting the hole data according to the attribute information of the hole to obtain the to-be-decrypted data at operation S202 may be implemented by: traversing a random grid boundary sequence corresponding to the target data according to the attribute information of the hole to obtain a target hole matched with the attribute information of the hole; and extracting data from the target hole to obtain the to-be-decrypted data.

The random grid boundary sequence is configured to determine the attribute information of the hole, for example, the random grid boundary sequence is configured to restrict the position information of the hole in the target data and the size information of the hole in the target data.

It should be noted that the random grid boundary sequence includes a plurality of grid sequences, and each of the grid sequences may be a randomly generated sequence or a uniformly distributed sequence with respect to features of the target data. By traversing each of the grid sequences in the random grid boundary sequence corresponding to the target data to find the target hole matched with the attribute information of the hole and then extracting the data from the target hole, the accuracy of extracting the data to be processed (i.e., the to-be-decrypted data) can be improved, so as to facilitate further processing on the to-be-decrypted data.

In the above process, instead of processing all the target data, merely the hole data in the target data is extracted, so that the amount of data to be processed is reduced, the efficiency of data processing can be effectively improved, the duration of data processing can be reduced, and the user experience can be improved.

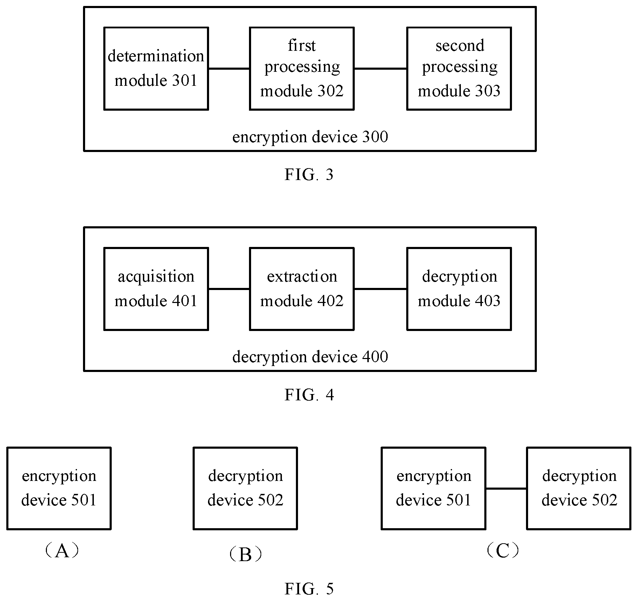

Devices according to the embodiments of the present disclosure will be described below in detail with reference to the drawings. FIG. 3 is a block diagram of an encryption device according to an embodiment of the present disclosure. As shown in FIG. 3, the encryption device 300 includes, but is not limited to, the following modules including: a determination module 301, a first processing module 302, and a second processing module 303.

The determination module 301 is configured to determine attribute information of a hole.

The first processing module 302 is configured to process original data based on the attribute information of the hole to obtain hole data.

The second processing module 303 is configured to process the hole data to obtain target data.

It should be noted that the encryption device 300 in the embodiment can implement the method applicable to the encryption device according to the embodiments of the present disclosure.

According to the encryption device 300 provided by the present disclosure, the attribute information of the hole is determined by the determination module 301; the original data is processed by the first processing module 302 based on the attribute information of the hole, so as to obtain the hole data which is data, in the original data, located in the hole, to facilitate operations on the hole data, and reduce the amount of data manipulations; and the hole data is processed by the second processing module 303 to obtain the target data, that is, not all the original data but merely the hole data is processed to obtain the target data, which increases the speed of data processing and improves the security of the data.

FIG. 4 is a block diagram of a decryption device according to an embodiment of the present disclosure. As shown in FIG. 4, the decryption device 400 includes, but is not limited to, the following modules including: an acquisition module 401, an extraction module 402, and a decryption module 403.

The acquisition module 401 is configured to acquire attribute information of a hole from a preset storage region, with the attribute information of the hole being matched with target data.

The extraction module 402 is configured to extract hole data according to the attribute information of the hole to obtain to-be-decrypted data.

The decryption module 403 is configured to decrypt the to-be-decrypted data to obtain decrypted data, and backfill the decrypted data into the hole corresponding to the to-be-decrypted data to obtain original data.

It should be noted that the decryption device 400 in the embodiment can implement the method applicable to the decryption device according to the embodiments of the present disclosure.

According to the decryption device 400 provided by the present disclosure, the attribute information of the hole matched with the target data is acquired from the preset storage region by the acquisition module 401, so that a position and a size of the hole in the target data can be specified to facilitate further processing on the data in the hole; the hole data (e.g., a part of the target data which is located in the hole) is extracted by the extraction module 402 according to the attribute information of the hole to obtain the to-be-decrypted data, the to-be-decrypted data is decrypted to obtain decrypted data, and the decrypted data is backfilled by the decryption module 403 into the hole corresponding to the to-be-decrypted data to obtain the original data, so that the amount of data to be processed during decrypting the data is reduced, and the speed of data decryption is increased, which enables the user to obtain the original data, which is accurate, as soon as possible, and improves the user experience.

FIG. 5 is a block diagram of a data processing system according to an embodiment of the present disclosure. As shown in FIG. 5, the data processing system includes, but is not limited to, the following devices including: an encryption device 501 (as shown in FIG. 5(A)); or, a decryption device 502 (as shown in FIG. 5(B)); or, the encryption device 501 and the decryption device 502 (as shown in FIG. 5(C)).

The encryption device 501 is configured to perform the data processing method applicable to the encryption device according to the embodiments of the present disclosure. The decryption device 502 is configured to perform the data processing method applicable to the decryption device according to the embodiments of the present disclosure.

It should be noted that the data processing system is applicable to an application scenario in which data contents of a file with a large data volume is to be protected and data processing is to be completed quickly. For example, a user logs in to a server through a smart terminal to quickly view image data (e.g., photos and video files) under an account corresponding to the user, the server is to perform encryption processing on the image data under the account corresponding to the user by the encryption device 501, and the smart terminal of the user supports decryption processing on the data (for example, the smart terminal includes the decryption device 502, so that the encrypted data downloaded by the smart terminal can be decrypted by the decryption device 502).

The encryption device 502 punches the original data based on the determined attribute information of the hole to obtain the original data including the hole, and then processes the hole data, that is, not all the original data but merely the data, in the original data, located in the hole is processed to obtain the target data, which increases the speed of data processing and the efficiency of data processing, thereby ensuring the security of the data.

For example, with the original data likened to a piece of paper, punching the original data based on the determined attribute information of the hole is similar to punching the piece of paper, so that the piece of paper including the hole cannot be used (that is, the original data including the hole cannot be processed); and correspondingly, since the overall data has a high internal correlation but the original data including the hole causes a lack of the internal correlation, the original data including the hole cannot be used, and the security of the target data during transmission can be ensured.

For example, a random algorithm is adopted to determine the attribute information of the hole (e.g., the position information of the hole and the size of the hole), the original data is punched based on the attribute information of the hole to obtain the original data including the hole, and the original data including the hole accordingly has certain randomness, in such case, if the target data is intercepted by a third party, the third party cannot decrypt the original data including the hole randomly generated, so that the security of the data is improved.

In some implementations, a frequency of occurrences of holes and/or a concentration degree of holes may be adjusted in terms of a spatial dimension to enhance the processing on the original data, so that the target data obtained has an improved security. For example, the file header information included in the original data carries a relatively large amount of core information, and thus the file header information may be punched frequently, so as to provide an enhanced protection for the file header information.

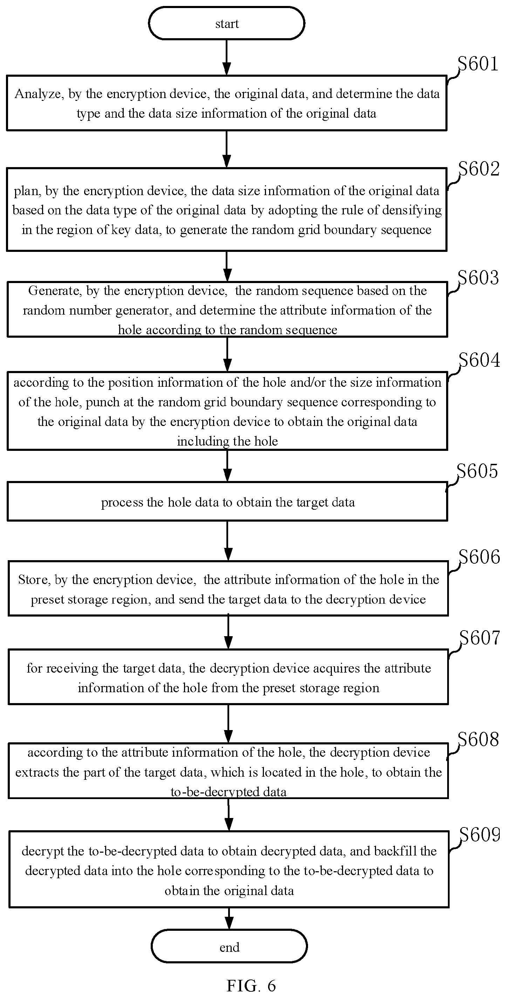

FIG. 6 is a flowchart illustrating an operating method of the data processing system according to an embodiment of the present disclosure. As shown in FIG. 6, the operating method of the data processing system includes, but is not limited to, the following operations S601 to S609.

At operation S601, the encryption device analyzes the original data, and determines the data type and the data size information of the original data.

The original data may be a data file, or may be a section of data stored in a memory. The above examples of the original data are merely for illustration, the original data may be specifically set as desired, and other examples of the original data which are not described herein also fall within the scope of the present disclosure, and will not be described here.

At operation S602, based on the data type of the original data, the encryption device plans the data size information of the original data by adopting the rule of densifying in the region of key data, to generate the random grid boundary sequence.

The random grid boundary sequence is configured to restrict the position information of the hole in the original data and the size information of the hole in the original data. The random grid boundary sequence may include a plurality of sequences of random points distributed between 0 and a total length of the original data. For example, the random grid boundary sequence includes a plurality of grid sequences, and the plurality of grid sequences may be uniformly distributed, or may be distributed differently based on the features of the original data, so as to restrict positions of punching the original data.

With the random grid boundary sequence, it can be ensured that no large blank areas (i.e., data parts without holes) exist during the original data being punched, so that the original data can be uniformly punched, and a proportion of leakage of the data can be reduced. Moreover, by restricting the process of punching the original data with the random grid boundary sequence, it can be ensured that the positions of the holes are not overlapped.

The rule of densifying in the region of key data may be a rule determined based on the region of key data, for example, to plan the grids to be dense in focused data but relatively loose in non-focused data.

In some implementations, the data type includes the video data; by planning grids for the key frames of the video data to obtain the first grid sequence, planning grids for frame data other than the key frames in the video data to obtain the second grid sequence, the random grid boundary sequence is to be determined according to the first grid sequence and the second grid sequence, and the density of holes in the first grid sequence is greater than that in the second grid sequence.

In some implementations, the data type includes the text data; by planning grids for the header of the data packet in the text data to obtain the third grid sequence with the feature of concentrated distribution, planning grids for the data other than the header of the data packet in the text data to obtain the fourth grid sequence with the feature of uniform distribution, the boundary sequence is to be determined according to the third grid sequence and the fourth grid sequence.

At operation S603, the encryption device generates the random sequence based on the random number generator, and determines the attribute information of the hole according to the random sequence.

The attribute information of the hole includes: at least one of the position information of the hole, the size information of the hole, the density information of holes, or the shape information of the hole. For example, the position information of the hole and the size information of the hole may be referred to as the metadata of the hole.

At operation S604, according to the position information of the hole and/or the size information of the hole, the encryption device punches at the random grid boundary sequence corresponding to the original data to obtain the original data including the hole.

A random punching method may be adopted so that: in the random grid boundary sequence corresponding to the original data, starting from the first grid sequence, all the grid sequences in the random grid boundary sequence are traversed sequentially, and each of the grid sequences is punched randomly, thereby obtaining the original data including the hole.

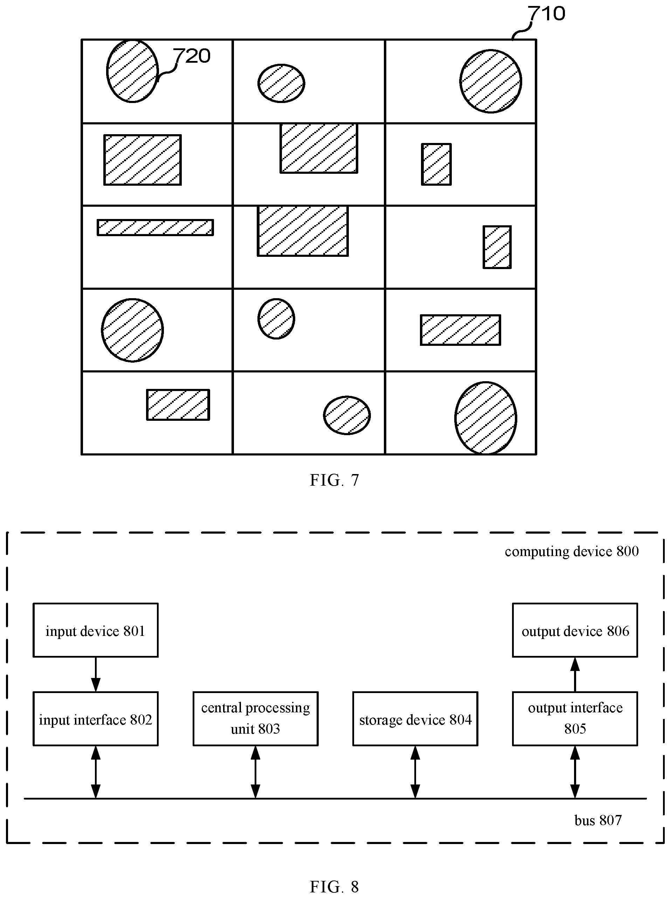

FIG. 7 is a schematic diagram illustrating original data including holes according to an embodiment of the present disclosure. As shown in FIG. 7, a tabular line 710 represents the random grid boundary sequence in the original data, which is configured to restrict the position information of the hole (e.g., the shadow shape 720) in the original data and the size information of the hole in the original data.

It should be noted that the shadow shape 720 may be embodied in various shapes such as an oval, a circle, a rectangle or a square (not shown in FIG. 7) with different sizes, so as to represent the shapes of corresponding holes in different random grids.

The random grid boundary sequence may include grids having equally divided structures, or may include grids having random mesh structures, and merely the original data is to be set correspondingly for restricting the positions and the sizes of different holes in the original data. The above examples of the random grid boundary sequence are merely for illustration, the random grid boundary sequence may be specifically set as desired, and other examples of the random grid boundary sequence which are not described herein also fall within the scope of the present disclosure, and will not be described here.

At operation S605, the hole data is processed to obtain the target data.

The hole data (e.g., the data in the original data, which is located in the hole) is extracted, the extracted data is processed or subjected to a calculation to obtain the to-be-processed data, the to-be-processed data is then backfilled into the corresponding hole to obtain the target data, and the target data is the original data encrypted, i.e., the original data with merely the data in the hole being encrypted.

A preset encryption algorithm (e.g., the AES algorithm) may be adopted to encrypt the data in the hole, or preset data may be used to replace the hole data (i.e., the data in the hole), thereby obtaining the target data.

For example, the video data is the video file in the MP4 format, and the video file includes the key frames; and during punching the video data, the holes may be located in the key frames as many as possible, so as to ensure that the density of the holes in the key frames is greater than a preset proportion, to enhance the protection for the key frames.

For example, the text data is a certain Internet Protocol (IP)-based data packet to be transmitted, the data packet includes a header, and during punching the text data, a grid sequence corresponding to the header of the data packet may be punched to form holes in a concentrated distribution, so as to enhance the protection for the header of the data packet; and data other than the header of the data packet in the text data may be punched to form holes in an uniformly distribution, so as to reduce the amount of data processing.

It should be noted that the data length of the to-be-processed data corresponding to the hole is matched with the preset length information; and the data width of the to-be-processed data corresponding to the hole is matched with the preset width information. For example, the data length of the to-be-processed data corresponding to the hole is set to be equal to a preset length, and the data width of the to-be-processed data corresponding to the hole is set to be equal to a preset width, for example, the preset length or the preset width is set to be an integral multiple of 16 bytes, so as to ensure that, in a procedure of backfilling the data, a data length of the data (i.e., the target data) obtained after the backfilling is the same as the data length of the original data.

At operation S606, the encryption device stores the attribute information of the hole in the preset storage region, and sends the target data to the decryption device.

At operation S607, for receiving the target data, the decryption device acquires the attribute information of the hole from the preset storage region.

The attribute information of the hole is matched with the target data.

At operation S608, according to the attribute information of the hole, the decryption device extracts the part of the target data, which is located in the hole, to obtain the to-be-decrypted data.

The decryption device may traverse the random grid boundary sequence corresponding to the target data according to the attribute information of the hole to obtain the target hole matched with the attribute information of the hole, and extract the data from the target hole to obtain the to-be-decrypted data.

The random grid boundary sequence is configured to restrict the position information of the hole in the target data and the size information of the hole in the target data.

At operation S609, the to-be-decrypted data is decrypted to obtain decrypted data, and the decrypted data is backfilled into the hole corresponding to the to-be-decrypted data to obtain the original data.

In the above data processing process, the original data is punched based on the determined attribute information of the hole to obtain the original data including the hole, so as to facilitates operations on the data in the hole, and the amount of data manipulations is reduced; and not all the original data but merely the data in the hole is processed (for example, encrypted or replaced by backfilling with the preset data) to obtain the target data, which improves the security of the data, increases the speed of data processing and the efficiency of processing on the original data with the large data volume, and improves the user experience.

It should be noted that the present disclosure is not limited to the specific configurations and processes described in the above embodiments and illustrated by the drawings. For convenience and simplicity of description, a detailed description of known methods is omitted herein, for specific operation processes of the systems, modules and units described above, reference may be made to the corresponding processes in the above methods, and those specific operation processes will not be described in detail here.

FIG. 8 is a schematic structural diagram illustrating an exemplary hardware architecture of a computing device capable of implementing the data processing methods and devices according to the embodiments of the present disclosure. As shown in FIG. 8, the computing device 800 includes an input device 801, an input interface 802, a central processing unit 803, a storage device 804, an output interface 805, and an output device 806. The input interface 802, the central processing unit 803, the storage device 804, and the output interface 805 are connected to each other through a bus 807, and the input device 801 and the output device 806 are connected to the bus 807 through the input interface 802 and the output interface 805 respectively, so as to be further connected to other components of the computing device 800.

The input device 801 receives input information from outside, and transmits the input information to the central processing unit 803 via the input interface 802; the central processing unit 803 processes the input information based on computer-executable instructions stored in the storage device 804 to generate output information, temporarily or permanently stores the output information in the storage device 804, and then transmits the output information to the output device 806 via the output interface 805; and the output device 806 outputs the output information out of the computing device 800 to be used by users.

In some implementations, the computing device shown in FIG. 8 may be implemented as an electronic device, which may include: a memory configured to store a computer program; and a processor configured to run the computer program stored in the memory to perform the data processing methods described above.

In some implementations, the computing device shown in FIG. 8 may be implemented as a data processing system, which may include: a memory configured to store a computer program; and a processor configured to run the computer program stored in the memory to perform the above data processing methods.

An embodiment of the present disclosure further provides a computer readable storage medium storing a computer program which, when executed by a processor, causes the processor to implement the above data processing methods.

The above description is merely of the exemplary embodiments of the present disclosure, and is not intended to limit the scope of the present disclosure. In general, the various embodiments of the present disclosure may be implemented by hardware or special circuits, software, logic or any combination thereof. For example, some aspects of the present disclosure may be implemented by hardware and other aspects may be implemented by firmware or software executable by a controller, a microprocessor or other computing devices, but the present disclosure is not limited thereto.

The embodiments of the present disclosure may be implemented by a processor of a mobile device executing computer program instructions. For example, the embodiments of the present disclosure are implemented in a processor entity, or by hardware, or by a combination of software and hardware. The computer program instructions may be assembly instructions, Instruction Set Architecture (ISA) instructions, machine instructions, machine-related instructions, microcode, firmware instructions, state setting data, or source code or object code written in one programming language or in any combination of a plurality of programming languages.

A block diagram illustrating any logic flow in the drawings of the present disclosure may show operations of a program, or interconnected logic circuits, modules and functions, or a combination of the operations of the program and the logic circuits, modules and functions. The computer program can be stored on a memory. The memory may be of any type suitable to local technical environment and may be implemented by using any suitable data storage technology. For example, the memory is, but not limited to, a Read-Only Memory (ROM), a Random Access Memory (RAM), and an optical storage device and system (a Digital Video Disc (DVD) or a Compact Disc (CD)). A computer-readable medium may include a non-transitory storage medium. The data processor may be of any type suitable to the local technical environment. For example, the processor is, but not limited to, a general-purpose computer, a special purpose computer, a microprocessor, a Digital Signal Processors (DSP), an Application Specific Integrated Circuit (ASIC), a Field Programmable Gate Array (FGPA), and a processor based on multi-core architecture.

The exemplary embodiments of the present disclosure are illustrated in detail above by exemplary and non-limiting examples. For those of ordinary skill in the art, various modifications and adjustments to the above embodiments can be obviously derived from the accompanying drawings and the appended claims, but those modifications and adjustments are within the scope of the present disclosure. Therefore, the proper scope of the present disclosure is defined by the appended claims.

## Claims

1. A data processing method, comprising:
determining attribute information of a hole;
processing original data based on the attribute information of the hole to obtain hole data, wherein the hole data is data, in the original data, which is located in the hole; and
processing the hole data to obtain target data.

2. The method of claim 1, wherein processing the hole data to obtain the target data comprises:
replacing the hole data with preset data to obtain the target data.

3. The method of claim 1, wherein processing the hole data to obtain the target data comprises:
encrypting the hole data by a preset encryption algorithm to obtain to-be-processed data; and
backfilling the to-be-processed data into the hole corresponding to the to-be-processed data to obtain the target data.

4. The method of claim 3, further comprising:
after encrypting the hole data by the preset encryption algorithm to obtain the to-be-processed data and before backfilling the to-be-processed data into the hole corresponding to the to-be-processed data to obtain the target data, performing at least one of following operations:
storing the attribute information of the hole in a preset storage region; or,
storing the to-be-processed data in a preset storage region.

5. The method of claim 4, wherein determining the attribute information of the hole comprises:
determining the attribute information of the hole based on a random sequence generated by a random number generator,
wherein the attribute information of the hole comprises at least one of position information of the hole, size information of the hole, density information of holes, or shape information of the hole.

6. The method of claim 5, wherein the size information of the hole comprises: preset length information and preset width information,
wherein a data length of the to-be-processed data corresponding to the hole is matched with the preset length information; and a data width of the to-be-processed data corresponding to the hole is matched with the preset width information.

7. The method of claim 1, further comprising:
before determining the attribute information of the hole, determining a data type and data size information of the original data; and
generating a boundary sequence according to the data type and the data size information, wherein the boundary sequence is configured to determine the attribute information of the hole.

8. The method of claim 7, wherein generating the boundary sequence according to the data type and the data size information comprises:
based on the data type, planning the data size information by adopting a rule of densifying in a region of key data, to generate the boundary sequence; or,
based on the data type and the data size information, randomly generating the boundary sequence comprising a plurality of random grids.

9. A data processing method, comprising:
acquiring attribute information of a hole from a preset storage region, the attribute information of the hole being matched with target data;
extracting hole data according to the attribute information of the hole to obtain to-be-decrypted data; and
decrypting the to-be-decrypted data to obtain decrypted data, and backfilling the decrypted data into the hole corresponding to the to-be-decrypted data to obtain original data.

10. A data processing system, comprising: at least one of an encryption device or a decryption device;
the encryption device is configured to perform the data processing method of any one of claims 1 to 8; and
the decryption device is configured to perform the data processing method of claim 9.

11. An electronic device, comprising:
at least one processor; and
a memory having stored thereon at least one computer program which, when executed by the at least one processor, causes the at least one processor to implement the data processing method of any one of claims 1 to 9.

12. A computer readable storage medium storing a computer program which, when executed by a processor, causes the processor to implement the data processing method of any one of claims 1 to 9.
